# EUROPEAN PATENT APPLICATION

(11) **EP 4 750 120 A1**
(43) Date of publication of application: **27.05.2026**
(21) Application number: 23946093.4
(22) Date of filing: 21.07.2023
(51) Int. Cl.: H04W 24/00

(54) **SENSING REPORTING DETERMINATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); WANG, Yaxin, Dongguan, Guangdong 523860 (CN)
(74) Representative: Mewburn Ellis LLP
(86) International application number: PCT/CN2023/108717
(87) International publication number: WO 2025/019999

(57) **Abstract**

The present application relates to a sensing reporting determination method. The method comprises: a terminal device receiving the correlation between a sensing type and sensing report indication information. In the embodiments of the present application, the correlation between a sensing type and sensing report indication information can be configured for a terminal device, so as to indicate the sensing reporting of a UE; and when a sensing service is subsequently executed, the terminal device can determine, on the basis of the sensing type of the sensing service and the correlation, how to perform sensing reporting.

## Description

### TECHNICAL FIELD

The present disclosure relates to the field of communications, in particular, to a method for determining sensing reporting, a terminal device, and a network device.

### BACKGROUND

In the current system, a user equipment (UE) does not know how to report, for example, being carried in a control plane message or via a specific protocol data unit (PDU) session, sensing information obtained by itself to the operator network. The UE also does not know which information should be reported to the network, for example, reporting an original signal obtained by measurement or the information generated after the UE performing local calculations to the network. It can be seen that the current system cannot effectively support UE as a sensing node to assist the mobile network in sensing. The network side does not indicate the UE on sensing reporting, and the UE cannot determine how to perform sensing reporting.

### SUMMARY

Embodiments of the present disclosure provide a method for determining sensing reporting, a terminal device, and a network device.

The embodiments of the present disclosure provide a method for determining sensing reporting, which includes:
receiving, by a terminal device, a correspondence between sensing type(s) and sensing reporting indication information.

The embodiments of the present disclosure provide a method for determining sensing reporting, which includes:
transmitting, by a network device, a correspondence between sensing type(s) and sensing reporting indication information.

The embodiments of the present disclosure provide a terminal device, including:
a first receiving unit, configured to receive a correspondence between sensing type(s) and sensing reporting indication information.

The embodiments of the present disclosure provide a network device, including:
a transmitting unit, configured to transmit a correspondence between sensing type(s) and sensing reporting indication information.

The embodiments of the present disclosure provide a terminal device, including: a transceiver, a processor, and a memory. The memory is configured to store a computer program, the transceiver is configured to communicate with another device, and the processor is configured to call the computer program stored in the memory and run the computer program to cause the terminal device to perform the above method for determining sensing reporting.

The embodiments of the present disclosure provide a network device, including: a transceiver, a processor, and a memory. The memory is configured to store a computer program, the transceiver is configured to communicate with another device, and the processor is configured to call the computer program stored in the memory and run the computer program to cause the network device to perform the above method for determining sensing reporting.

The embodiments of the present disclosure provide a chip to perform the above method for determining sensing reporting.

Specifically, the chip includes a processor configured to call a computer program from a memory and run the computer program to cause a device equipped with the chip to perform the above method for determining sensing reporting.

The embodiments of the present disclosure provide a computer-readable storage medium configured to store a computer program, where the computer program, when executed by a device, causes the device to perform the above method for determining sensing reporting.

The embodiments of the present disclosure provide a computer program product including computer program instructions, where the computer program instructions cause a computer to perform the above method for determining sensing reporting.

The embodiments of the present disclosure provide a computer program, and the computer program, when executed on a computer, causes the computer to perform the above method for determining sensing reporting.

In the embodiments of the present disclosure, the network device configures the correspondence between the sensing type(s) and the sensing reporting indication information for the terminal device, thereby indicating the UE's sensing reporting; the terminal device receives the correspondence between the sensing type(s) and the sensing reporting indication information, and in a case of performing sensing reporting, the terminal device may determine how to perform sensing reporting based on the sensing type of the sensing service and the correspondence.

### BRIEF DESCRIPTION OF THE DRAWINGS

FIG. 1 is a schematic diagram of an application scenario according to the embodiments of the present disclosure.
FIG. 2A is a 5G network system architecture diagram according to the embodiments of the present disclosure.
FIG. 2B is another 5G network system architecture according to the embodiments of the present disclosure.
FIG. 3 is a schematic flowchart of a method for determining sensing reporting 300 according to an embodiment of the present disclosure.
FIG. 4 is a schematic flowchart of a method for determining sensing reporting 400 according to an embodiment of the present disclosure.
FIG. 5 is a flowchart of an implementation of configuring a correspondence between a sensing type and sensing reporting indication information in Embodiment 1 of the present disclosure.
FIG. 6 is a flowchart of an implementation of configuring a correspondence between a sensing type and sensing reporting indication information in Embodiment 2 of the present disclosure.
FIG. 7 is a schematic block diagram of a terminal device 700 according to an embodiment of the present disclosure.
FIG. 8 is a schematic block diagram of a terminal device 800 according to another embodiment of the present disclosure.
FIG. 9 is a schematic block diagram of a network device 900 according to an embodiment of the present disclosure.
FIG. 10 is a schematic block diagram of a network device 1000 according to another embodiment of the present disclosure.
FIG. 11 is a schematic block diagram of a communication device according to an embodiment of the present disclosure.
FIG. 12 is a schematic block diagram of a chip according to an embodiment of the present disclosure.
FIG. 13 is a schematic block diagram of a communication system according to an embodiment of the present disclosure.

### DETAILED DESCRIPTION

Technical solutions in the embodiments of the present disclosure will be described below in conjunction with the drawings of the embodiments of the present disclosure.

The technical solutions of the embodiments of the present disclosure may be applied to various communication systems, such as a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), wireless fidelity (WiFi), a 5th-generation (5G) communication system, or other communication systems.

Generally speaking, conventional communication systems support a limited number of connections and are easy to implement. However, with the development of communication technologies, mobile communication systems support not only the conventional communication but also, for example, device to device (D2D) communication, machine to machine (M2M) communication, machine type communication (MTC), vehicle to vehicle (V2V) communication, and vehicle to everything (V2X) communication. The embodiments of the present disclosure may also be applied to these communication systems.

In an implementation, a communication system in the embodiments of the present disclosure may be applied to a carrier aggregation (CA) scenario, a dual connectivity (DC) scenario, or a standalone (SA) network deployment scenario.

In an implementation, the communication system in the embodiments of the present disclosure may be applied to an unlicensed spectrum, where the unlicensed spectrum may be considered as a shared spectrum. Alternatively, the communication system in the embodiments of the present disclosure may be applied to a licensed spectrum, where the licensed spectrum may be considered as an unshared spectrum.

In the embodiments of the present disclosure, various embodiments are described with respect to a network device and a terminal device. The terminal device may also be referred to as a user equipment (UE), an access terminal, a user unit, a user station, a mobile station, a mobile console, a remote station, a remote terminal, a mobile device, a user terminal, a terminal, a wireless communication device, a user agent, a user apparatus, or the like.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next-generation communication system (e.g., an NR network), a terminal device in a future evolved public land mobile network (PLMN), or the like.

In the embodiments of the present disclosure, the terminal device may be deployed on land, including indoor or outdoor environments, in forms such as handheld, wearable, or in-vehicle; alternatively, the terminal device may be deployed on water (e.g., a steamship); alternatively, the terminal device may be deployed in the air (e.g., an airplane, a balloon, or a satellite).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example and not limitation, in the embodiments of the present disclosure, the terminal device may also be a wearable device. The wearable device, which is also referred to as a wearable smart device, is a generic term for devices capable of being worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not only a hardware device, but also achieves powerful functions through software supporting, data interaction, and cloud interaction. A generalized wearable smart device includes, for example, a smartwatch or smart glasses with full functions, large size, and achieving entire or partial functions without relying on a smartphone, as well as, a smart bracelet or smart jewelry for monitoring physical signs, which only focuses on a certain type of application function and needs to be used in conjunction with other devices (e.g., a smartphone).

In the embodiments of the present disclosure, the network device may be a device used for communicating with a mobile device. The network device may be an access point (AP) in the WLAN, an evolutional base station (Evolutional Node B, eNB or eNodeB) in the LTE, a relay station or an access point, an in-vehicle device, a wearable device, a network device (gNB) in an NR network, a network device in the future evolved PLMN, a network device in the NTN, or the like.

By way of example and not limitation, in the embodiments of the present disclosure, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may be a base station provided on land, water, or other places.

In the embodiments of the present disclosure, the network device may provide services for a cell, and the terminal device communicates with the network device through transmission resources (e.g., frequency domain resources, or frequency spectrum resources) used by the cell. The cell may be a cell corresponding to the network device (e.g., a base station), or belong to a macro base station or a base station corresponding to a small cell. Small cells here may include a metro cell, a micro cell, a pico cell, a femto cell, etc. These small cells have characteristics of small coverage and low transmission power, and are suitable for providing a data transmission service with high speed.

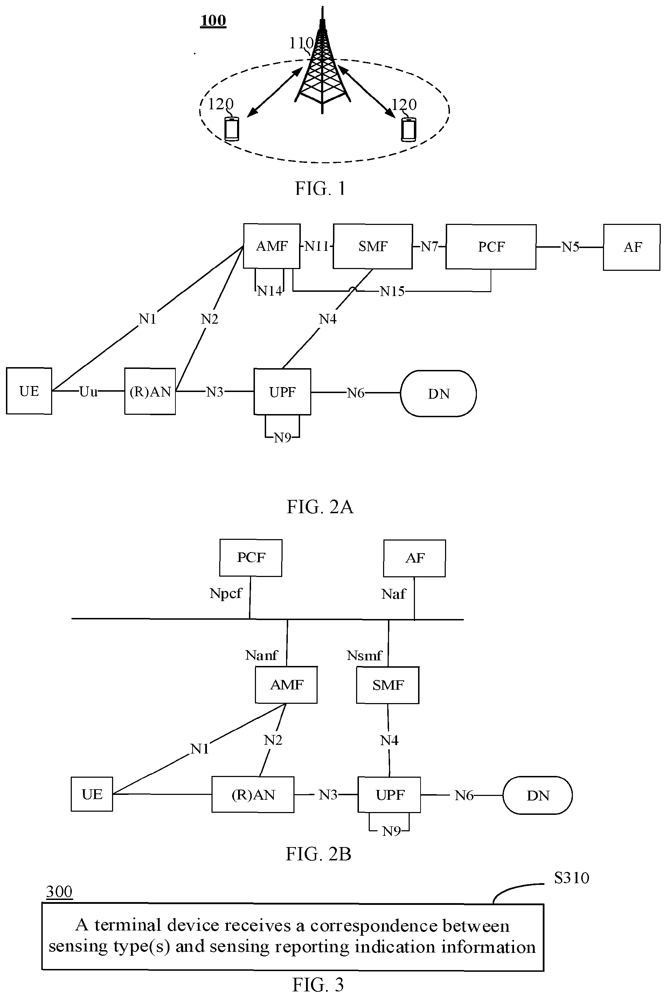

FIG. 1 exemplarily shows a communication system 100. The communication system includes a network device 110 and two terminal devices 120. In an implementation, the communication system 100 may include a plurality of network devices 110, and each network device 110 may have a coverage range including other numbers of terminal devices 120, which is not limited in the embodiments of the present disclosure.

In an implementation, the communication system 100 may further include other network entities, such as a mobility management entity (MME), or an access and mobility management function (AMF), which is not limited in the embodiments of the present disclosure.

The network device may include an access network device and a core network device. That is, the wireless communication system further includes multiple core networks for communicating with the access network device. The access network device may be an evolutional node B (which may be abbreviated as eNB or e-NodeB), a macro base station, a micro base station (also referred to as a "small base station"), a pico base station, an access point (AP), a transmission point (TP) or a new generation Node B (gNodeB), etc., in a long-term evolution (LTE) system, a next-generation mobile communication (next radio, NR) system or an authorized auxiliary access long-term evolution (LAA-LTE) system.

It should be understood that, in the embodiments of the present disclosure, a device with a communication function in the network/system may be referred to as a communication device. Considering the communication system illustrated in FIG. 1 as an example, communication devices may include the network device and the terminal device that have the communication function, and the network device and the terminal device may be specific devices in the embodiments of the present disclosure, which will not be repeated here. The communication device may further include other devices in the communication system, for example, network entities such as a network controller and a mobility management entity, which is not limited in the embodiments of the present disclosure.

It should be understood that the terms "system" and "network" are often used interchangeably herein. The term "and/or" herein is only an association correspondence to describe associated objects, which means that there may be three kinds of correspondences. For example, A and/or B may represent that: A exists alone, both A and B exist, and B exists alone. In addition, a character "/" herein generally means that related objects before and after this character are in an "or" correspondence.

It should be understood that "indicate" mentioned in the embodiments of the present disclosure may mean a direct indication or an indirect indication, or represent that there is an association correspondence. For example, A indicates B, which may mean that A directly indicates B (for example, B may be obtained through A), or may mean that A indirectly indicates B (for example, A indicates C, and B may be obtained through C), or may mean that there is an association correspondence between A and B.

In the description of the embodiments of the present disclosure, the term "correspond" may mean that there is a direct correspondence or indirect correspondence between the two, or it may mean that there is an associated correspondence between the two, or it may mean a correspondence of indicating and being indicated, a correspondence of configuring and being configured, etc.

To facilitate the understanding of the technical solutions in the embodiments of the present disclosure, relevant technologies of the embodiments of the present disclosure will be described below. The following related technologies, as optional solutions, may be arbitrarily combined with the technical solutions of the embodiments of the present disclosure, and those combined solutions all fall within the protection scope of the embodiments of the present disclosure.

The present disclosure is applicable to mobile networks, i.e., cellular networks. Following description will be made using 5G networks, but the present disclosure is not limited to 5G networks and may also be used in future mobile networks, such as 6G networks.

The 5G network system architecture diagram is shown in FIGS. 2A and 2B. FIG. 2A shows a mode in which core network elements are connected to each other via agreed interfaces, and FIG. 2B shows a mode in which core network elements interact by calling services provided by the network elements. The methods proposed in the present disclosure are applicable to both modes. The UE establishes an access stratum connection with an access network (AN) via a Uu interface to exchange access layer messages and wireless data transmission. The UE establishes a non-access stratum (NAS) connection with an AMF via an N1 interface to exchange NAS messages. AMF refers to a mobility management function in the core network, and SMF refers to a session management function in the core network. In addition to be responsible for mobility management for the UE, AMF is also responsible for forwarding session management related messages between the UE and SMF. PCF refers to a policy management function in the core network, which responsible for formulating policies related to UE mobility management, session management, billing, etc. UPF refers to a user plane function in the core network, which transmits data with an external data network via an N6 interface and with the AN via an N3 interface. After accessing the 5G network via the Uu interface, the UE establishes a PDU session for data transmission under control of the SMF.

Current cellular networks, including 5G networks, are only used for communication. However, the radio electromagnetic wave signals used by cellular networks may not only be used for wireless data transmission and communication, but also have environmental sensing capabilities, such as user motion or gesture recognition, breathing monitoring, terminal movement speed measurement, environmental imaging, weather monitoring. Therefore, in the future, cellular networks may be considered not only for communication and data transmission, but also for the obtaining of sensing information.

If the mobile network not only supports communication capabilities but also adds sensing capabilities, the mobile network may sense the environment in a region, such as performing environmental imaging and weather monitoring; the mobile network may also sense specific UEs, such as sensing the UE's mobile data and movement trajectory; or sense users using specific UEs, such as sensing the user's breathing rate and heartbeat monitoring. To support the sensing capability of the mobile network, the UE may become a sensing node, measuring the wireless signals around the UE and reporting the sensing results to the network device in the operator's network. However, in the current system, the UE does not know how to report its obtained sensing information to the operator network, such as whether to carry it in a control plane message or report it via a specific PDU session; nor does the UE know which information should be reported to the network, such as reporting an original signal obtained by measurement or reporting information generated by the UE after local calculation. It can be seen that the current system cannot effectively support UE as a sensing node to assist the mobile network in sensing. The network side does not indicate the UE on sensing reporting, and the UE cannot determine how to perform sensing reporting.

FIG. 3 is a schematic flowchart of a method for determining sensing reporting 300 according to an embodiment of the present disclosure. This method may optionally be applied to the system shown in FIG. 1, FIG. 2A or FIG. 2B, but is not limited thereto. The method includes at least part of the following.

In S310, a terminal device receives a correspondence between sensing type(s) and sensing reporting indication information.

For example, the terminal device may receive the correspondence from a network side. In an example, the correspondence may be generated by a PCF or a sensing function (SF) and transmitted to an AMF, and the AMF forwards the received correspondence to the terminal device.

By receiving the correspondence between the sensing type and the sensing reporting indication information, the network device configures reporting indication information corresponding to one or more sensing types for the terminal device; subsequently, when performing sensing reporting, the terminal device may determine corresponding reporting indication information according to a sensing type of a sensing service and the correspondence, and perform reporting based on the corresponding reporting indication information.

In some embodiments, the correspondence between the sensing type(s) and the sensing reporting indication information may be carried in a UE policy. For example, the PCF or SF generates the correspondence between the sensing type and the sensing reporting indication information, where the correspondence is carried in the UE policy; the UE policy may be forwarded to the terminal device via the AMF; and the terminal device receives the UE policy and obtains the correspondence from the UE policy.

The UE policy may be a UE sensing policy.

In an example, after generating the correspondence between the sensing type and the sensing reporting indication information, the PCF or SF transmits a UE policy control (Npcf_UE policy control) message to the AMF. The Npcf_UE policy control message includes a UE policy, where the correspondence between the sensing type(s) and the sensing reporting indication information is carried in the UE policy. Then, the AMF transmits a UE configuration update command to the terminal device. The UE configuration update command includes a UE policy, where the correspondence between the sensing type(s) and the sensing reporting indication information is carried the UE policy.

In some other implementations, the correspondence between the sensing type(s) and the sensing reporting indication information may be transmitted via a UE route selection policy (URSP) rule. For example, the terminal device receives the URSP rule, the URSP rule includes the sensing type(s) and the sensing reporting indication information.

In an example, service description information in the URSP rule may include the sensing type; and route selection description information used for sensing data reporting in the URSP rule may serve as the sensing reporting indication information. The route selection description information used for sensing data reporting may include network slice information and/or a data network name (DNN). The network slice information may be a slice identifier. The same URSP rule includes both the sensing type and the sensing reporting indication information, so that the correspondence between the sensing type(s) and the sensing reporting indication information is carried in the URSP rule.

In some embodiments, the sensing type(s) may be one or more sensing types, such as weather monitoring, terminal movement speed measurement, and environmental imaging. In this case, the network device may configure multiple correspondences for the terminal device. For example, a correspondence between Sensing type 1 and Sensing reporting indication information 1 may be configured, and a correspondence between Sensing type 2 and Sensing reporting indication information 2 may be configured. Alternatively, a correspondence between multiple sensing types and one piece of reporting indication information may be configured, or a correspondence between one sensing type and multiple pieces of reporting indication information may be configured. For example, Sensing type 1 and Sensing type 2 may be configured to correspond to Sensing reporting indication information 1; and Sensing type 3, Sensing type 4, and Sensing type 5 may be configured to correspond to Sensing reporting indication information 2.

In this way, in a case of reporting the data of the sensing service, the terminal device may determine the sensing reporting indication information corresponding to the sensing type of the sensing service according to the pre-configured correspondence between the sensing type and the sensing reporting indication information, and perform sensing service reporting based on the sensing reporting indication information. For example, if the correspondence between Sensing type 1 and Sensing reporting indication information 1 is pre-configured, and the type of sensing service to be reported is Sensing type 1, then according to the correspondence, reporting may be performed based on the corresponding Sensing reporting indication information 1; if the correspondence between Sensing type 2 and Sensing reporting indication information 2 is pre-configured, and the type of sensing service to be reported is Sensing type 2, then according to the correspondence, reporting may be performed based on the corresponding Sensing reporting indication information 2.

Alternatively, all sensing services or all sensing services supported by the mobile network may be classified into a unified type called "Sensing type". In this case, there is no need to distinguish the specific sensing type of the sensing service, and the network device may configure unified sensing reporting indication information for all sensing services or all sensing services supported by the mobile network. In this way, in a case of reporting the data of the sensing service, the terminal device may determine the sensing reporting indication information according to the pre-configured correspondence between the sensing type and the sensing reporting indication information, and perform reporting based on the sensing reporting indication information.

In some implementations, the sensing reporting indication information includes at least one of:
a reporting content indication;
a reporting manner indication;
a domain name or data network name (DNN) to which a reporting content belongs; or route selection description information used for sensing data reporting.

The domain name may include a fully qualified domain name (FQDN).

For example, for the case in which the correspondence between the sensing type and the sensing reporting indication information is carried in the first message, the sensing reporting indication information may include at least one of a reporting content indication, a reporting manner indication, and a domain name or DNN to which the reporting content belongs. For another example, for the case in which the URSP rule is used to carry the correspondence between the sensing type and the sensing reporting indication information, the sensing reporting indication information may include route selection description information for sensing data reporting.

In an example, the reporting content indication is used to indicate reporting an original measurement signal obtained by the UE, or reporting data obtained by calculating and/or processing the original measurement signal obtained by the UE.

In an example, the reporting manner indication is used to indicate that reporting is performed in a control plane message carrying manner or reporting is performed in a user plane transmission manner.

If the sensing reporting indication information includes the domain name or DNN to which the reporting content belongs, it means that reporting is performed in the user plane transmission manner. Therefore, in this case, the sensing reporting indication information may not include a reporting manner indication.

If the sensing reporting indication information includes the reporting manner indication, and the reporting manner indication information indicates that reporting is performed in a control plane message carrying manner, the reporting indication information does not include the domain name or DNN to which the reporting content belongs.

After performing sensing, the terminal device may report sensing data according to the sensing type of the sensing service and the correspondence between the sensing type and the sensing reporting indication information.

For example, the terminal device determines the sensing reporting indication information corresponding to the sensing service according to the sensing type of the sensing service and the correspondence between the sensing type and the sensing reporting indication information; and reports the data of the sensing service based on the sensing reporting indication information corresponding to the sensing service.

For example, in a case where the sensing reporting indication information includes a reporting content indication, the terminal device may report the original measurement signal obtained by the UE or report the data obtained by calculating and/or processing the original measurement signal obtained by the UE based on the reporting content indication in the sensing reporting indication information.

For example, in a case where the sensing reporting indication information includes a reporting manner indication, the terminal device may report the data of the sensing service by a manner in which the data of the sensing service is carried in the control plane message or report the data of the sensing service in the user plane transmission manner based on the reporting manner indication in the sensing reporting indication information.

For example, in a case where the sensing reporting indication information includes the domain name to which the reporting content belongs, the terminal device may determine a URSP rule that matches the domain name based on the domain name to which the reporting content in the sensing reporting indication information belongs, determine a PDU session by using the route selection description information in the URSP rule, and report the data of the sensing service by using the determined PDU session.

The above multiple manners may be combined reasonably. For example, in a case where the reporting indication information includes both a reporting content indication and a reporting manner indication, the terminal device may report in a manner indicated by the reporting manner indication and report a content indicated by the reporting content indication.

In some implementations, the way in which the terminal device reports sensing data according to the sensing type of the sensing service and the correspondence between the sensing type and the sensing reporting indication information includes:
the terminal device determining a URSP rule that matches the sensing type of the sensing service, where the URSP rule that matches the sensing type of the sensing service includes the sensing type of the sensing service; and
the terminal device determining a PDU session by using route selection description information in the URSP rule that matches the sensing type of the sensing service, and reporting the data of the sensing service.

For example, the routes selection description information in the URSP rule that matches the sensing type of the sensing service includes a slice identifier, and the terminal device may use the PDU session corresponding to the slice identifier to report the data of the sensing service. The terminal device may also report, according to the pre-configured reporting content indication, the original measurement signal obtained by the UE or the data obtained by calculating and/or processing the original measurement signal obtained by the UE by using the PDU session corresponding to the slice identifier.

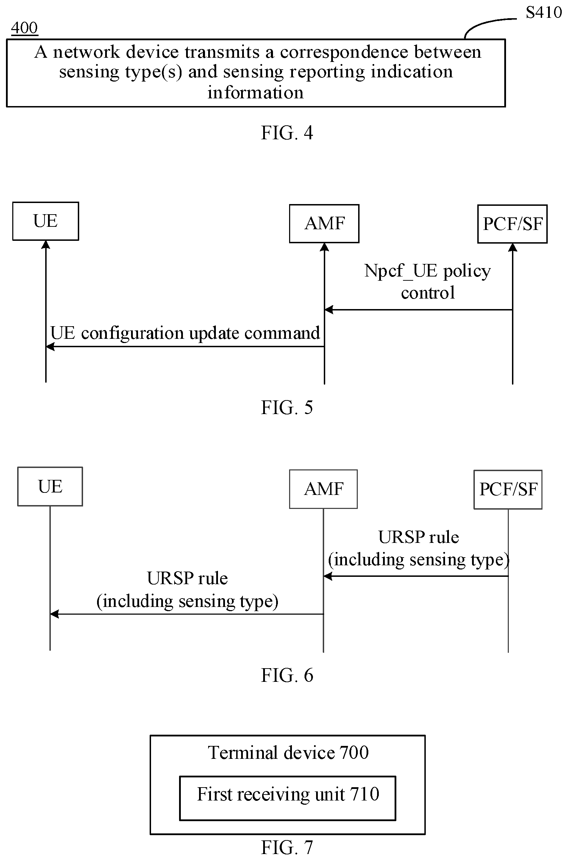

FIG. 4 is a schematic flowchart of a method for determining sensing reporting 400 according to an embodiment of the present disclosure. This method may optionally be applied to the system shown in FIG. 1, FIG. 2A or FIG. 2B, but is not limited thereto. The method includes at least part of following contents.

In S410, a network device transmits a correspondence between sensing type(s) and sensing reporting indication information.

The network device may include a PCF or an SF. For example, the PCF or SF transmits the correspondence between the sensing type(s) and the sensing reporting indication information to an AMF, and the AMF transmits the correspondence between the sensing type(s) and the sensing reporting indication information to a terminal device to configure the sensing reporting of the terminal device, so that the terminal device clearly understands how to report the sensing information obtained by itself to the network side, and which information to report, and the like.

In some implementations, the network device transmitting the correspondence between the sensing type(s) and sensing reporting indication information, includes: the network device transmitting a UE policy, where the correspondence is carried in the UE policy. The UE policy may be a UE sensing policy.

In some implementations, the network device transmitting the correspondence between the sensing type(s) and sensing reporting indication information, includes: the network device transmitting a UE URSP rule, where the URSP rule includes the sensing type(s) and the sensing reporting indication information. For example, service description information in the URSP rule includes the sensing type.

In some implementations, the sensing type(s) in the correspondence include one or more sensing types. The network device may configure multiple correspondences for the terminal device; for example, a correspondence between Sensing type 1 and Sensing reporting indication information 1 may be configured, and a correspondence between Sensing type 2 and Sensing reporting indication information 2 may be configured. Alternatively, a correspondence between multiple sensing types and one piece of reporting indication information may be configured, or a correspondence between one sensing type and multiple pieces of reporting indication information may be configured.

In this way, in a case of reporting the data of the sensing service, the terminal device may determine the sensing reporting indication information corresponding to the sensing type of the sensing service according to the pre-configured correspondence between the sensing type and the sensing reporting indication information, and perform sensing service reporting based on the sensing reporting indication information.

Alternatively, all sensing services or all sensing services supported by the mobile network may be classified into a unified type called "Sensing type". In this case, there is no need to distinguish the specific sensing type of the sensing service, and the network device may configure unified sensing reporting indication information for all sensing services or all sensing services supported by the mobile network. In this way, in a case of reporting the data of the sensing service, the terminal device may determine the sensing reporting indication information according to the pre-configured correspondence between the sensing type and the sensing reporting indication information, and perform reporting based on the sensing reporting indication information.

In some implementations, the sensing reporting indication information includes at least one of:
a reporting content indication;
a reporting manner indication;
a domain name or data network name (DNN) to which a reporting content belongs; or route selection description information used for sensing data reporting.

The domain name may include an FQDN.

In an example, the reporting content indication is used to indicate reporting an original measurement signal obtained by the UE, or reporting data obtained by calculating and/or processing the original measurement signal obtained by the UE.

In an example, the reporting manner indication is used to indicate that reporting is performed in a control plane message carrying manner or reporting is performed in a user plane transmission manner.

In an example, the route selection description information used for sensing data reporting includes network slice information and/or data network name.

If the sensing reporting indication information includes the domain name or DNN to which the reporting content belongs, it means that reporting is performed via the user plane transmission manner. Therefore, in this case, the sensing reporting indication information may not include a reporting manner indication. If the sensing reporting indication information includes a reporting manner indication, and the reporting manner indication information indicates that the reporting is performed in a control plane message carrying manner, the reporting indication information does not include the domain name or DNN to which the reporting content belongs.

After the network device configures the correspondence between the sensing type and the sensing reporting indication information for the terminal device, the terminal device may perform sensing reporting based on the correspondence; accordingly, the network device may receive sensing data, where the sensing data is reported by the terminal device according to the sensing type of the sensing service and the correspondence.

For other specific examples of the network device performing the method 400 in the embodiments, reference may be made to the relevant description of the network device in the method 300, which will not be repeated here for the sake of brevity.

Specific embodiments will be made in detail below with reference to the accompanying drawings with reference to describe the present disclosure.

### Embodiment 1

In this embodiment, a core network element, such as a policy control function (PCF), an access and mobility management function (AMF), and a sensing function (SF), configures a correspondence between a sensing type and sensing reporting indication information for a UE.

The sensing type may be one or more specific sensing types, such as weather monitoring, terminal movement speed measurement, environmental imaging; alternatively, all sensing services or all sensing services supported by the mobile network may be classified into a unified type called "Sensing (type)".

The sensing reporting indication information includes at least one of:
(1) a reporting content indication, used to indicate reporting an original measurement signal obtained by the UE or reporting data obtained by calculating and/or processing the original measurement signal obtained by the UE;
(2) a reporting manner indication, used to indicate reporting is performed in a control plane message carrying manner or reporting is performed in a user plane transmission manner; or
(3) in a case where the reporting is performed in the user plane transmission manner, the reporting indication information including the domain name (e.g., a fully qualified domain name (FQDN)) or the data network name (DNN) to which the reporting content belongs.

If the reporting indication information includes the domain name or DNN to which the reporting content belongs, it means that the reporting is performed via the user plane transmission manner, and the sensing reporting indication may not include the reporting manner indication.

The correspondence between the sensing type(s) and the sensing reporting indication information may be included in a UE policy and configured for the UE. For example, a new type of UE sensing policy may be set, and the correspondence between the sensing type and the sensing reporting indication information may be included in the UE sensing policy and configured for the UE. FIG. 5 is a flowchart of an implementation of configuring a correspondence between a sensing type and sensing reporting indication information in Embodiment 1 of the present disclosure. As shown in FIG. 5, a PCF or SF configures a correspondence between sensing type(s) and sensing reporting indication information for a terminal device, and transmits the Npcf_UE policy control message to an AMF by a manner in which the correspondence is carried in an Npcf_UE policy control message; the AMF transmits the UE configuration update command to the terminal device (UE) in a manner in which the correspondence is carried in a UE configuration update command. The name of the message in FIG. 5 is only an example. In the embodiments of the present disclosure, other messages may be used to configure a correspondence between a sensing type and sensing reporting indication information, which will not be repeated here.

In a case where the UE performs a sensing service as a sensing node subsequently, the UE reports sensing data according to the sensing type of the sensing service, the correspondence between the sensing type and the sensing reporting indication information configured by the network.

For example, in a case where the sensing type and reporting content indication are configured, and the reporting content indication information indicates reporting an original data, the UE directly reports the measured original data; in a case where the sensing type and reporting content indication are configured, and the reporting content indication information indicates reporting a calculated and/or processed data, the UE calculates/processes the original data obtained by measurement and reports the calculated/processed data.

For another example, in a case where the sensing type and reporting manner indication are configured, and the reporting manner indication information indicates that the control plane message is used for reporting, the UE will report the data to be reported in a manner in which the data to be reported is carried in the control plane message; in a case where the sensing type and reporting manner indication are configured, and the reporting manner indication information indicates that the user plane transmission manner is used for reporting, the UE reports the data to be reported via a PDU session. In a case of reporting, the measured original data may be directly reported according to the reporting content indication, or the measured original data is calculated/processed and the calculated/processed data is reported.

For yet another example, if the sensing type and the domain name (e.g., FQDN) or DNN to which the reporting content belongs are configured, it means that the reporting is performed via the user plane transmission manner. The UE determines the FQDN/DNN corresponding to a reporting content according to a sensing type of a sensing service, and then uses the FQDN/DNN to match the existing URSP rules, determines a PDU session needed to be used through the matched URSP rules, and reports data by using the PDU session.

### Embodiment 2

In this embodiment, the URSP rule obtained by the UE from the core network element includes a sensing type, which is used to indicate the UE to match and use the URSP rule according to the sensing type of the sensing service to determine a PDU session for sensing data reporting.

FIG. 6 is a flowchart of an implementation of configuring a correspondence between a sensing type and sensing reporting indication information in Embodiment 2 of the present disclosure. As shown in FIG. 6, a PCF or an SF configures a URSP rule for a terminal device, and the URSP rule includes a sensing type. Specifically, the sensing type may be included in service description information in the URSP rule. Route selection description information used for sensing data reporting in the URSP rule may serve as sensing reporting indication information corresponding to the sensing type. Specifically, the route selection description information used for sensing data reporting includes network slice information and/or DNN. The PCF or SF transmits the URSP rule including the sensing type to an AMF, and the AMF forwards the URSP rule to a UE.

Table 1 is an example of a URSP rule including a sensing type. As shown in Table 1, for the service description information in the URSP rule, a sensing type is newly added. The URSP rule further includes a route selection description list, the route selection description list includes route selection description information. Table 2 is an example of route selection description information. As shown in Table 2, the route selection description information includes network slice information (e.g., a slice identifier in Table 2) and DNN. The network slice information and/or DNN in the route selection description information may be used as sensing reporting indication information. The same URSP rule includes both the sensing type and the network slice information and/or DNN, which means that a correspondence between the sensing type and the network slice information and/or DNN is included.

**Table 1**

| Information Name | Description |
|---|---|
| Service Description | |
| Application Identifier | Containing operating system identifier and application identifier |
| IP header description | Target-side IP triplet |
| Domain Name Description | Target domain name |
| ... | ... |
| Sensing Type | |
| Route selection description list | |

**Table 2**

| Information Name | Description |
|---|---|
| Route selection component | Slice identifier |
| Network slice selection | |
| DNN selection | DNN |
| Access type selection | 3GPP or non-3GPP access |
| ... | ... |

The terminal device may determine the PDU session for performing sensing data reporting by using the URSP rule.

For example, the core network element configures URSP rule 1 and URSP rule 2 for the UE; the service description of URSP rule 1 includes Sensing type = a, and the route selection description includes a slice identifier b; the service description of URSP rule 2 includes Sensing type = c, and the route selection description includes a slice identifier d. In a case where the UE performs a sensing task of Sensing type = a, the UE may determine the corresponding URSP rule 1 and report the sensing data that needs to be reported via the PDU session of the slice identifier b in the URSP rule 1.

For another example, the core network element configures URSP rule 3 and URSP rule 4 for the UE; the service description of URSP rule 3 includes the sensing type of all sensing services, and the route selection description includes a slice identifier e; the service description of URSP rule 4 does not include the sensing type, and the route selection description includes a slice identifier f. In a case where the UE performs any sensing service, the UE may determine the corresponding URSP rule 3 and report the sensing data that needs to be reported via the PDU session of the slice identifier e in the URSP rule 3.

FIG. 7 is a schematic block diagram of a terminal device 700 according to an embodiment of the present disclosure. The terminal device 700 may include:
a first receiving unit 710, configured to receive a correspondence between sensing type(s) and sensing reporting indication information.

In an implementation, the first receiving unit 710 is configured to receive a user equipment (UE) policy, where the correspondence is carried in the UE policy.

In an implementation, the UE policy includes a UE sensing policy.

In an implementation, the first receiving unit 710 is configured to receive a UE route selection policy (URSP) rule, where the URSP rule includes the sensing type(s) and the sensing reporting indication information.

In an implementation, the URSP rule including the sensing type(s), includes:
service description information in the URSP rule including the sensing type(s).

In an implementation, the sensing type(s) in the correspondence include one or more sensing types.

In an implementation, the sensing reporting indication information includes at least one of:
a reporting content indication;
a reporting manner indication;
a domain name or data network name to which a reporting content belongs; or
route selection description information used for sensing data reporting.

In an implementation, the reporting content indication is used to indicate reporting an original measurement signal obtained by the UE, or reporting data obtained by calculating and/or processing the original measurement signal obtained by the UE.

In an implementation, the reporting manner indication is used to indicate that reporting is performed in a control plane message carrying manner or reporting is performed in a user plane transmission manner.

In an implementation, the domain name includes an FQDN.

In an implementation, the route selection description information used for sensing data reporting includes network slice information and/or a data network name.

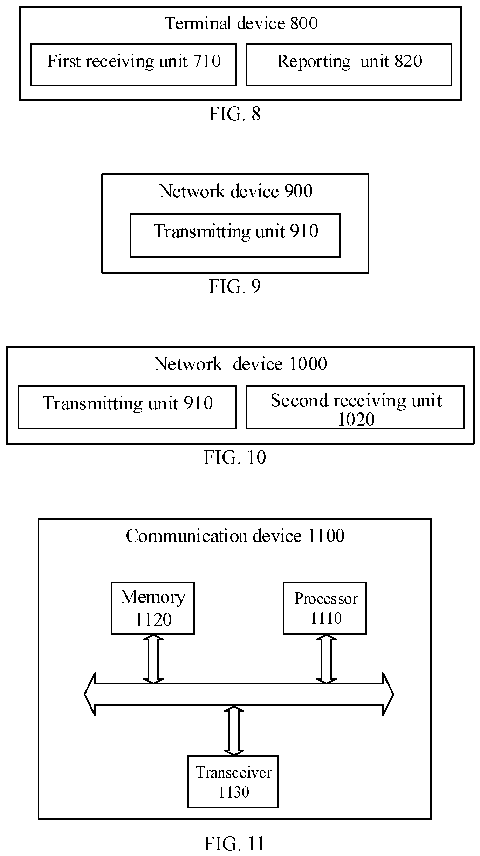

FIG. 8 is a schematic block diagram of a terminal device 800 according to another embodiment of the present disclosure. The terminal device 800 may include one or more features of the terminal device. In an implementation, the terminal device 800 further includes:
a reporting unit 820, configured to perform sensing data reporting according to a sensing type of a sensing service and the correspondence.

In an implementation, the reporting unit 820 is configured to:
determine sensing reporting indication information corresponding to the sensing service according to the sensing type of the sensing service and the correspondence; and
report data of the sensing service based on the sensing reporting indication information corresponding to the sensing service.

In an implementation, the reporting unit 820 is configured to report an original measurement signal obtained by the UE or report data obtained by calculating and/or processing the original measurement signal obtained by the UE based on the reporting content indication in the sensing reporting indication information.

In an implementation, the reporting unit 820 is configured to report the data of the sensing service in a manner in which the data of the sensing service is carried in the control plane message or report the data of the sensing service in the user plane transmission manner based on the reporting manner indication in the sensing reporting indication information.

In an implementation, the reporting unit 820 is configured to determine a URSP rule that matches the domain name based on the domain name to which the reporting content in the sensing reporting indication information belongs, determine a PDU session by using the route selection description information in the URSP rule, and report the data of the sensing service by using the determined PDU session.

In an implementation, the reporting unit 820 is configured to:
determine a URSP rule that matches the sensing type of the sensing service, where the URSP rule that matches the sensing type of the sensing service includes the sensing type of the sensing service; and
determine a PDU session by using route selection description information in the URSP rule that matches the sensing type of the sensing service, and report the data of the sensing service.

The terminal devices 700 and 800 according to the embodiments of the present disclosure may implement the corresponding functions of the terminal device in the above method embodiments. The procedures, functions, implementations and beneficial effects corresponding to each module (sub-module, unit or component, etc.) in the terminal devices 700 and 800 may be found in the corresponding description in the above method embodiments, which will not be repeated here. It should be noted that the functions described in the various modules (sub-modules, units or components, etc.) in the terminal devices 700 and 800 in the application embodiments may be implemented by different modules (sub-modules, units or components, etc.) or by the same module (sub-module, unit or component, etc.).

FIG. 9 is a schematic block diagram of a network device 900 according to an embodiment of the present disclosure. The network device 900 may include:
a transmitting unit 910, configured to transmit a correspondence between sensing type(s) and sensing reporting indication information.

In an implementation, the transmitting unit 910 is configured to transmit a UE policy, where the correspondence is carried in the UE policy.

In an implementation, the UE policy includes a UE sensing policy.

In an implementation, the transmitting unit 910 is configured to transmit a UE route selection policy (URSP) rule, where the URSP rule includes the sensing type(s) and the sensing reporting indication information.

In an implementation, the URSP rule including the sensing type(s) includes:
service description information in the URSP rule including the sensing type.

In an implementation, the sensing type(s) in the correspondence include one or more sensing types.

In an implementation, the sensing reporting indication information includes at least one of:
a reporting content indication;
a reporting manner indication;
a domain name or data network name to which the reporting content belongs; or
route selection description information used for sensing data reporting.

In an implementation, the reporting content indication is used to indicate reporting an original measurement signal obtained by the UE, or reporting data obtained by calculating and/or processing the original measurement signal obtained by the UE.

In an implementation, the reporting manner indication is used to indicate reporting is performed in a control plane message carrying manner or reporting is performed in a user plane transmission manner.

In an implementation, the domain name includes an FQDN.

In an implementation, the route selection description information used for sensing data reporting includes network slice information and/or a data network name.

FIG. 10 is a schematic block diagram of a network device 1000 according to another embodiment of the present disclosure. The network device 1000 may include one or more features of the terminal device. In an implementation, the network device 1000 further includes:
a second receiving unit 1020, configured to receive sensing data, where the sensing data is reported by the terminal device according to a sensing type of a sensing service and the correspondence.

The network devices 900 and 1000 according to the embodiments of the present disclosure may implement the corresponding functions of the network device in the above method embodiments. The procedures, functions, implementations and beneficial effects corresponding to each module (sub-module, unit or component, etc.) in the network devices 900 and 1000 may be found in the corresponding description in the above method embodiments, which will not be repeated here. It should be noted that the functions described in the various modules (sub-modules, units or components, etc.) in the network devices 900 and 1000 in the application embodiments may be implemented by different modules (sub-modules, units or components, etc.) or by the same module (sub-module, unit or component, etc.).

FIG. 11 is a schematic structural diagram of a communication device 1100 according to the embodiments of the present disclosure. The communication device 1100 includes a processor 1110, and the processor 1110 may call a computer program from a memory and run the computer program to cause the communication device 1100 to implement the methods in the embodiments of the present disclosure.

In an implementation, the communication device 1100 may further include a memory 1120. The processor 1110 may call a computer program from the memory 1120, and run the computer program to cause the communication device 1100 to implement the methods in the embodiment of the present disclosure.

The memory 1120 may be a separate device independent from the processor 1110, or may be integrated into the processor 1110.

In an implementation, the communication device 1100 may further include a transceiver 1130, and the processor 1110 may control the transceiver 1130 to communicate with other devices, and specifically, to transmit information or data to other devices, or receive information or data transmitted by other devices.

The transceiver 1130 may include a transmitter and a receiver. The transceiver 1130 may further include antenna(s), and there may be one or more antennas.

In an implementation, the communication device 1100 may be the network device in the embodiments of the present disclosure, and the communication device 1100 may implement the corresponding procedure implemented by the network device in the various methods of the embodiments of the present disclosure, which will not be repeated here for the sake of brevity.

In an implementation, the communication device 1100 may be the terminal device in the embodiments of the present disclosure, and the communication device 1100 may implement the corresponding procedure implemented by the terminal device in the various methods of the embodiments of the present disclosure, which will not be repeated here for the sake of brevity.

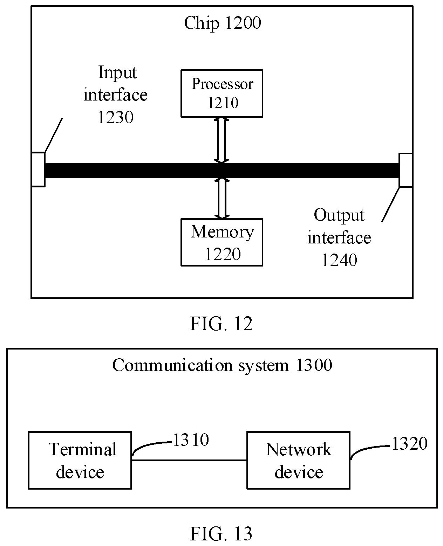

FIG. 12 is a schematic structural diagram of a chip 1200 according to the embodiments of the present disclosure. The chip 1200 includes a processor 1210, and the processor 1210 may call a computer program from a memory and run the computer program to implement the methods in the embodiments of the present disclosure.

In an implementation, the chip 1200 may further include a memory 1220. The processor 1210 may call a computer program from the memory 1220 and run the computer program to implement the methods performed by a terminal device or a network device in the embodiment of the present disclosure.

The memory 1220 may be a separate device independent from the processor 1210, or may be integrated into the processor 1210.

In an implementation, the chip 1200 may further include an input interface 1230. The processor 1210 may control the input interface 1230 to communicate with other devices or chips, and specifically, to obtain information or data transmitted by other devices or chips.

In an implementation, the chip 1200 may further include an output interface 1240. The processor 1210 may control the output interface 1240 to communicate with other devices or chips, and specifically, to output information or data to other devices or chips.

In an implementation, the chip may be applied to the network device in the embodiments of the present disclosure, and the chip may implement the corresponding procedure implemented by the network device in the various methods of the embodiments of the present disclosure, which will not be repeated here for the sake of brevity.

In an implementation, the chip may be applied to the terminal device in the embodiments of the present disclosure, and the chip may implement the corresponding procedure implemented by the terminal device in the various methods of the embodiments of the present disclosure, which will not be repeated here for the sake of brevity.

The chips applied to the network device and the terminal device may be the same chip or different chips.

It should be understood that the chip mentioned in the embodiments of the present disclosure may also be referred to as a system-level chip, a system chip, a chip system or a system-on-chip chip, etc.

The above processor may be a general-purpose processor, a digital signal processor (DSP), a field programmable gate array (FPGA), an application specific integrated circuit (ASIC) or another programmable logic device, a transistor logic device, a discrete hardware component, etc. The general-purpose processor may be a microprocessor, or any conventional processor, etc.

The memory may be a volatile (transitory) memory or a non-volatile (non-transitory) memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM).

It should be understood that the above memory is exemplary but not limiting illustration. For example, the memory in embodiments of the present disclosure may be a static random access memory (static RAM, SRAM), a dynamic random access memory (dynamic RAM, DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present disclosure is intended to include, but not limited to, these and any other suitable types of memories.

FIG. 13 is a schematic block diagram of a communication system 1300 according to the embodiments of the present disclosure. The communication system 1300 includes a terminal device 1310 and a network device 1320.

The terminal device 1310 includes:
a first receiving unit configured to receive a correspondence between a sensing type and sensing reporting indication information.

The network device 1320 includes:
a transmitting unit configured to transmit a correspondence between a sensing type and sensing reporting indication information.

The terminal device 1310 may be used to implement the corresponding functions implemented by the terminal device in the above methods, and the network device 1320 may be used to implement the corresponding functions implemented by the network device in the above methods, which will not be repeated here for the sake of brevity.

The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instructions are loaded on and executed by a computer, processes or functions described in the embodiments of the present disclosure are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It can be understood that, in the various embodiments of the present disclosure, the magnitude of the serial numbers of the above-mentioned processes does not mean the order of execution. The execution order of each process should be determined by its function and internal logic, and should not constitute any limitation on the implementation process of the embodiments of the present disclosure.

It may be clearly understood by those skilled in the art that, for convenience and brevity of the description, the specific working procedures of the system, the apparatus and the unit described above may refer to the corresponding procedures in the above method embodiments, which will not be repeated here.

The above description is only specific implementation of the present disclosure, but the protection scope of the present disclosure is not limited thereto. Any person skilled in the art may readily conceive of variations or substitutions within the technical scope disclosed in the present disclosure, which should be included within the protection scope of the present disclosure. Therefore, the protection scope of the present disclosure shall be subject to the protection scope of the claims.

## Claims

1. A method for determining sensing reporting, comprising:
receiving, by a terminal device, a correspondence between sensing type(s) and sensing reporting indication information.

2. The method according to claim 1, wherein receiving, by the terminal device, the correspondence between the sensing type(s) and the sensing reporting indication information comprises:
receiving, by the terminal device, a user equipment (UE) policy, wherein the correspondence is carried in the UE policy.

3. The method according to claim 2, wherein the UE policy comprises a UE sensing policy.

4. The method according to claim 1, wherein receiving, by the terminal device, the correspondence between the sensing type(s) and the sensing reporting indication information comprises:
receiving, by the terminal device, a UE route selection policy (URSP) rule, wherein the URSP rule comprises the sensing type(s) and the sensing reporting indication information.

5. The method according to claim 4, wherein the URSP rule comprising the sensing type(s) comprises:
service description information in the URSP rule comprising the sensing type(s).

6. The method according to any one of claims 1 to 5, wherein the sensing type(s) in the correspondence comprises one or more sensing types.

7. The method according to any one of claims 1 to 6, wherein the sensing reporting indication information comprises at least one of:
a reporting content indication;
a reporting manner indication;
a domain name or data network name to which the reporting content belongs; or
route selection description information used for sensing data reporting.

8. The method according to claim 7, wherein the reporting content indication is used to indicate reporting an original measurement signal obtained by the UE, or reporting data obtained by calculating and/or processing the original measurement signal obtained by the UE.

9. The method according to claim 7, wherein the reporting manner indication is used to indicate that reporting is performed in a control plane message carrying manner or reporting is performed in a user plane transmission manner.

10. The method according to claim 7, wherein the domain name comprises a fully qualified domain name (FQDN).

11. The method according to claim 7, wherein the route selection description information used for sensing data reporting comprises network slice information and/or a data network name.

12. The method according to any one of claims 1 to 11, further comprising:
performing, by the terminal device, sensing data reporting according to a sensing type of a sensing service and the correspondence.

13. The method according to claim 12, wherein performing, by the terminal device, sensing data reporting according to the sensing type of the sensing service and the correspondence comprises:
determining, by the terminal device, sensing reporting indication information corresponding to the sensing service according to the sensing type of the sensing service and the correspondence; and
reporting, by the terminal device, data of the sensing service based on the sensing reporting indication information corresponding to the sensing service.

14. The method according to claim 13, wherein reporting, by the terminal device, the data of the sensing service based on the sensing reporting indication information corresponding to the sensing service comprises:
reporting, by the terminal device, an original measurement signal obtained by the UE or data obtained by calculating and/or processing the original measurement signal obtained by the UE based on a reporting content indication in the sensing reporting indication information.

15. The method according to claim 13, wherein reporting, by the terminal device, the data of the sensing service based on the sensing reporting indication information corresponding to the sensing service comprises:
reporting, by the terminal device, the data of the sensing service in a manner in which the data of the sensing service is carried in a control plane message or reporting the data of the sensing service in a user plane transmission manner based on a reporting manner indication in the sensing reporting indication information.

16. The method according to claim 13, wherein reporting, by the terminal device, the data of the sensing service based on the sensing reporting indication information corresponding to the sensing service comprises:
determining, by the terminal device, a URSP rule that matches a domain name based on the domain name to which the reporting content in the sensing reporting indication information belongs, determining a protocol data unit (PDU) session by using route selection description information in the URSP rule, and reporting the data of the sensing service by using the determined PDU session.

17. The method according to claim 12, wherein performing, by the terminal device, sensing data reporting according to the sensing type of the sensing service and the correspondence comprises:
determining, by the terminal device, a URSP rule that matches the sensing type of the sensing service, wherein the URSP rule that matches the sensing type of the sensing service comprises the sensing type of the sensing service; and
determining, by the terminal device, a PDU session by using route selection description information in the URSP rule that matches the sensing type of the sensing service, and reporting the data of the sensing service.

18. A method for determining sensing reporting, comprising:
transmitting, by a network device, a correspondence between sensing type(s) and sensing reporting indication information.

19. The method according to claim 18, wherein transmitting, by the network device, the correspondence between the sensing type(s) and the sensing reporting indication information comprises:
transmitting, by the network device, a user equipment (UE) policy, wherein the correspondence is carried in the UE policy.

20. The method according to claim 19, wherein the UE policy comprises a UE sensing policy.

21. The method according to claim 18, wherein transmitting, by the network device, the correspondence between the sensing type(s) and the sensing reporting indication information comprises:
transmitting, by the network device, a UE route selection policy (URSP) rule, wherein the URSP rule comprises the sensing type(s) and the sensing reporting indication information.

22. The method according to claim 21, wherein the URSP rule comprising the sensing type(s) comprises:
service description information in the URSP rule comprising the sensing type(s).

23. The method according to any one of claims 18 to 22, wherein the sensing type(s) in the correspondence comprises one or more sensing types.

24. The method according to any one of claims 18 to 23, wherein the sensing reporting indication information comprises at least one of:
a reporting content indication;
a reporting manner indication;
a domain name or data network name to which the reporting content belongs; or
route selection description information used for sensing data reporting.

25. The method according to claim 24, wherein the reporting content indication is used to indicate reporting an original measurement signal obtained by the UE, or reporting data obtained by calculating and/or processing the original measurement signal obtained by the UE.

26. The method according to claim 24, wherein the reporting manner indication is used to indicate that reporting is performed in a control plane message carrying manner or reporting is performed in a user plane transmission manner.

27. The method according to claim 24, wherein the domain name comprises a fully qualified domain name (FQDN).

28. The method according to claim 24, wherein the route selection description information used for sensing data reporting comprises network slice information and/or a data network name.

29. The method according to any one of claims 18 to 28, further comprising:
receiving, by the network device, sensing data, wherein the sensing data is reported by the terminal device according to a sensing type of a sensing service and the correspondence.

30. The method according to any one of claims 18 to 29, wherein the network device comprises a policy control function (PCF) or a sensing function (SF).

31. A terminal device, comprising:
a first receiving unit, configured to receive a correspondence between sensing type(s) and sensing reporting indication information.

32. The terminal device according to claim 31, wherein the first receiving unit is configured to receive a user equipment (UE) policy, wherein the correspondence is carried in the UE policy.

33. The terminal device according to claim 32, wherein the UE policy comprises a UE sensing policy.

34. The terminal device according to claim 31, wherein the first receiving unit is configured to receive a UE route selection policy (URSP) rule, wherein the URSP rule comprises the sensing type(s) and the sensing reporting indication information.

35. The terminal device according to claim 34, wherein the URSP rule comprising the sensing type(s) comprises:
service description information in the URSP rule comprising the sensing type(s).

36. The terminal device according to any one of claims 31 to 35, wherein the sensing type(s) in the correspondence comprises one or more sensing types.

37. The terminal device according to any one of claims 31 to 36, wherein the sensing reporting indication information comprises at least one of:
a reporting content indication;
a reporting manner indication;
a domain name or data network name to which the reporting content belongs; or
route selection description information used for sensing data reporting.

38. The terminal device according to claim 37, wherein the reporting content indication is used to indicate reporting an original measurement signal obtained by the UE, or reporting data obtained by calculating and/or processing the original measurement signal obtained by the UE.

39. The terminal device according to claim 37, wherein the reporting manner indication is used to indicate that reporting is performed in a control plane message carrying manner or reporting is performed in a user plane transmission manner.

40. The terminal device according to claim 37, wherein the domain name comprises a fully qualified domain name (FQDN).

41. The terminal device according to claim 37, wherein the route selection description information used for sensing data reporting comprises network slice information and/or a data network name.

42. The terminal device according to any one of claims 31 to 41, further comprising:
a reporting unit, configured to perform sensing data reporting according to a sensing type of a sensing service and the correspondence.

43. The terminal device according to claim 42, wherein the reporting unit is configured to:
determine sensing reporting indication information corresponding to the sensing service according to the sensing type of the sensing service and the correspondence; and
report data of the sensing service based on the sensing reporting indication information corresponding to the sensing service.

44. The terminal device according to claim 43, wherein the reporting unit is configured to report an original measurement signal obtained by the UE or data obtained by calculating and/or processing the original measurement signal obtained by the UE based on the reporting content indication in the sensing reporting indication information.

45. The terminal device according to claim 43, wherein the reporting unit is configured to report the data of the sensing service by a manner in which the data of the sensing service is carried in the control plane message or report the data of the sensing service in a user plane transmission manner based on a reporting manner indication in the sensing reporting indication information.

46. The terminal device according to claim 43, wherein the reporting unit is configured to determine a URSP rule that matches a domain name based on the domain name to which a reporting content in the sensing reporting indication information belongs, determine a protocol data unit (PDU) session by using route selection description information in the URSP rule, and report the data of the sensing service by using the determined PDU session.

47. The terminal device according to claim 42, wherein the reporting unit is configured to:
determine a URSP rule that matches the sensing type of the sensing service, wherein the URSP rule that matches the sensing type of the sensing service comprises the sensing type of the sensing service; and
determine a PDU session by using route selection description information in the URSP rule that matches the sensing type of the sensing service, and report data of the sensing service.

48. A network device, comprising:
a transmitting unit, configured to transmit a correspondence between sensing type(s) and sensing reporting indication information.

49. The network device according to claim 48, wherein the transmitting unit is configured to transmit a user equipment (UE) policy, wherein the correspondence is carried in the UE policy.

50. The network device according to claim 49, wherein the UE policy comprises a UE sensing policy.

51. The network device according to claim 48, wherein the transmitting unit is configured to transmit a UE route selection policy (URSP) rule, wherein the URSP rule comprises the sensing type(s) and the sensing reporting indication information.

52. The network device according to claim 51, wherein the URSP rule comprising the sensing type(s) comprises:
service description information in the URSP rule comprising the sensing type(s).

53. The network device according to any one of claims 48 to 52, wherein the sensing type(s) in the correspondence comprises one or more sensing types.

54. The network device according to any one of claims 48 to 53, wherein the sensing reporting indication information comprises at least one of:
a reporting content indication;
a reporting manner indication;
a domain name or data network name to which the reporting content belongs; or
route selection description information used for sensing data reporting.

55. The network device according to claim 54, wherein the reporting content indication is used to indicate reporting an original measurement signal obtained by the UE, or reporting data obtained by calculating and/or processing the original measurement signal obtained by the UE.

56. The network device according to claim 54, wherein the reporting manner indication is used to indicate that reporting is performed in a control plane message carrying manner or to reporting is performed in a user plane transmission manner.

57. The network device according to claim 54, wherein the domain name comprises a fully qualified domain name (FQDN).

58. The network device according to claim 54, wherein the route selection description information used for sensing data reporting comprises network slice information and/or a data network name.

59. The network device according to any one of claims 48 to 58, further comprising:
a second receiving unit, configured to receive sensing data, wherein the sensing data is reported by the terminal device according to a sensing type of a sensing service and the correspondence.

60. The network device according to any one of claims 48 to 59, wherein the network device comprises a policy control function (PCF) or a policy control function (SF).

61. A terminal device, comprising: a transceiver, a processor and a memory, wherein the memory is configured to store a computer program, the transceiver is configured to communicate with another device, and the processor is configured to call the computer program stored in the memory and run the computer program to cause the terminal device to perform the method according to any one of claims 1 to 17.

62. A network device, comprising: a transceiver, a processor and a memory, wherein the memory is configured to store a computer program, the transceiver is configured to communicate with another device, and the processor is configured to call the computer program stored in the memory and run the computer program to cause the network device to perform the method according to any one of claims 18 to 30.

63. A chip, comprising a processor configured to call a computer program from a memory and run the computer program to cause a device equipped with the chip to perform the method according to any one of claims 1 to 17 or the method according to any one of claims 18 to 30.

64. A computer-readable storage medium, configured to store a computer program, wherein the computer program, when executed by a device, causes the device to perform the method according to any one of claims 1 to 17 or the method according to any one of claims 18 to 30.

65. A computer program product, comprising computer program instructions, wherein the computer program instructions cause a computer to perform the method according to any one of claims 1 to 17 or the method according to any one of claims 18 to 30.

66. A computer program, wherein the computer program causes a computer to perform the method according to any one of claims 1 to 17 or the method according to any one of claims 18 to 30.
